# EUROPEAN PATENT SPECIFICATION

(11) **EP 3 613 619 B1**
(45) Date of publication and mention of the grant of the patent: **23.06.2021**
(21) Application number: 18190526.6
(22) Date of filing: 23.08.2018
(51) Int. Cl.: B60J 1/20, B60J 7/00

(54) **GUIDE RAIL FOR USE IN AN OPEN ROOF CONSTRUCTION AND OPEN ROOF CONSTRUCTION COMPRISING SUCH GUIDE RAIL**
FÜHRUNGSSCHIENE ZUR VERWENDUNG IN EINER OFFENEN DACHKONSTRUKTION UND OFFENE DACHKONSTRUKTION MIT SOLCH EINER FÜHRUNGSSCHIENE
RAIL DE GUIDAGE DESTINÉ À ÊTRE UTILISÉ DANS UNE CONSTRUCTION À TOIT OUVRANT ET CONSTRUCTION À TOIT OUVRANT COMPRENANT CE RAIL DE GUIDAGE

(43) Date of publication of application: 26.02.2020
(73) Proprietor: Inalfa Roof Systems Group B.V., 5807 GW Oostrum (NL)
(72) Inventor: van Boxtel, Eduardus Christianus Henricus, 5411 BS Zeeland (NL); Custers, Jur Johannes Maria, 5973 KC Lottum (NL)
(74) Representative: De Vries & Metman

(56) References cited:
- EP-A1- 2 317 062
- EP-A1- 2 987 667
- WO-A1-2010/106767
- US-A1- 2017 297 419

## Description

The invention relates to a guide rail for use in an open roof construction for a vehicle having a roof opening in its fixed roof, according to the preamble of claim 1.

Such guide rail is known, for example from EP 2 987 668. Such guide rail is used to guide a sunscreen having guide strips at its side edges. To prevent the guide strips to be pulled from the guide channel through the narrow entrance opening in extreme situations during use, this opening should be made as small as possible. However, a part of the extrusion die must form both the narrow entrance opening and the guide channel and thus the minimum size of the narrow entrance opening is limited, otherwise the die will not be stable enough in that position.

EP 2 987 667, from which claim 1 is delimited, discloses a guide rail for use in an open roof construction for a vehicle which comprises guide locking members defining the entrance opening which are made on a separate plastic part.

EP 2 317 062 discloses a blind system including a guide channel for the blind for use in a building or equipment, such as a wall, window or skylight. A body defining the guide channel may be extruded from a rigid material, e.g. including a metal such as aluminium, or a polymer such as PVC. The body may be assembled from two separate pieces to define an entrance opining with a very small clearance.

It is one of the objects of the present invention to provide a guide rail in which there are no limits to the narrow entrance opening.

To obtain this and other objects, the guide rail according to the invention is characterized by the features of the characterizing portion of claim 1.

By forming one of the flanges from a plastic member any size and shape of the narrow entrance opening can be made. Still it is not necessary to form the complete guide channel by a plastic member.

As the plastic member defines a bottom flange of the guide channel, the plastic member will then form the main sliding surface for the sunscreen which is favorable as it is easy to choose a plastic having good sliding properties.

The plastic member may be an extruded profile or an injection-moulded part and in the former case it is possible to form the plastic member by 2K extrusion in which the basic component may e.g. be a PA, possibly fiber reinforced, and the second component contains PTFE in a position forming the main sliding surface of the guide channel. Such plastic member is stable and provides good support to the sunscreen on the one hand and has optimal sliding properties on the other hand.

The plastic member is attached to the aluminium profile, for example in a direction parallel to the longitudinal direction of the aluminium profile, e.g. through a tongue in groove joint, or in a direction perpendicularly to the longitudinal direction of the aluminium profile, e.g. is clicked into the aluminium profile or through heat stakes or screws. With such methods of attachment, the plastic member can completely replace a flange of the extruded aluminium profile.

Preferably, the flange of the aluminium profile is provided with a hook member protruding into the guide channel and defining the narrow entrance opening.

In transverse direction, the flange made with the plastic member is shorter or longer than the flange of the aluminium profile, depending on the required support for the sunscreen.

The plastic member can be made from a thermoplastic, such as PP, POM, HDPE, PA or PTFE, or a plastic containing a dosage of PTFE , or a plastic comprising MOS₂ (Molybdenum-disulphide) or a plastic containing a lubricant modifier.

The invention also includes an open roof construction for a vehicle having a roof opening in its fixed roof comprising a pair of guide rails as described above.

Further details and advantages follow from the below description referring to the appended drawings showing embodiments of the guide rail and open roof construction.
Fig. 1 is a schematic perspective view of an automobile comprising the open roof construction according to the invention.
Fig. 2 is a very schematic enlarged perspective view of a sunshade assembly of the open roof construction of Fig. 1.
Fig. 3 is a cross sectional view of a prior art sunshade assembly showing on a large scale a guide rail and surrounding parts near the front of the roof opening.
Fig. 4 is a cross sectional view according to line IV-IV in Fig. 2 on a larger scale.
Fig. 5 - 13 are views corresponding to that of Fig. 4, but showing different embodiments of the guide rail.
Fig. 14 is a view corresponding to that of Fig. 3 but showing another embodiment of the guide rail and open roof construction.

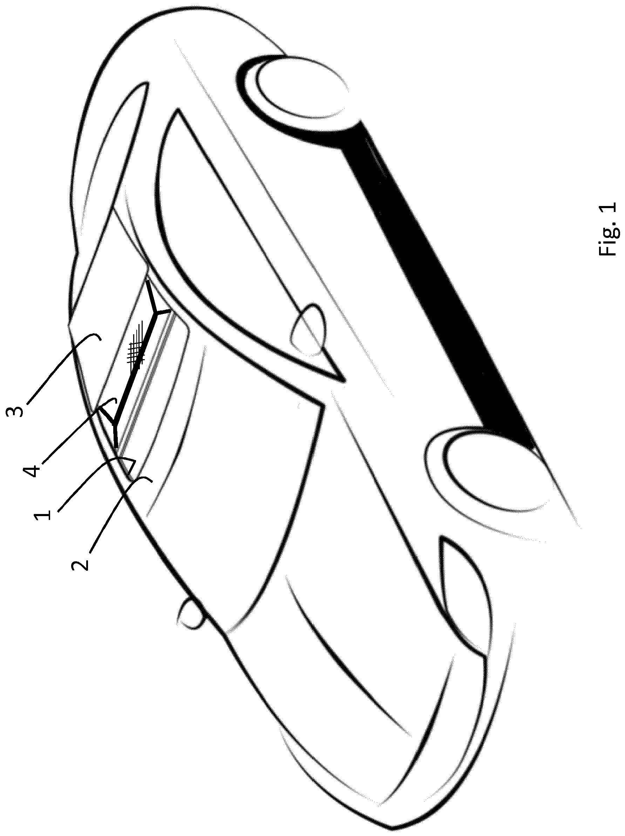

Firstly referring to Fig. 1, a vehicle having an open roof construction is illustrated schematically. Said open roof construction comprises a roof opening 1 in a fixed roof part 2 of the vehicle, in this case a passenger car, and a movable closure panel 3 which, by means not illustrated in detail but known per se, can be moved for opening and closing said roof opening 1. In Fig. 1 closure panel 3 has been illustrated in a position in which it opens roof opening 1.

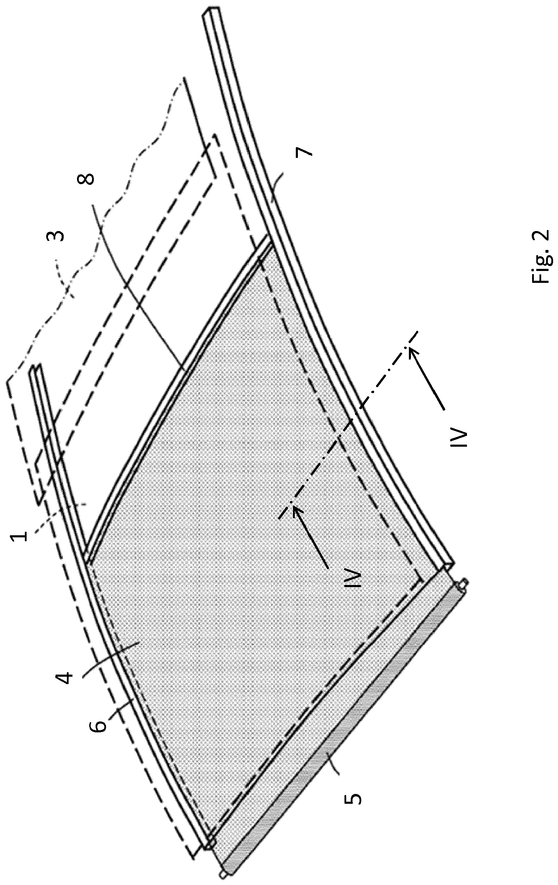

Below roof opening 1 a sunshade assembly in accordance with the present invention is positioned. Basically and as shown in Fig. 2, said sunshade assembly comprises a flexible sunscreen 4, a rotatable winding shaft 5 for winding and unwinding the sunscreen 4, and two opposite guide rails 6 and 7 for cooperation with two opposite longitudinal edges of sunscreen 4. The sunshade assembly may also be constructed such that the sunscreen is folded when opened.

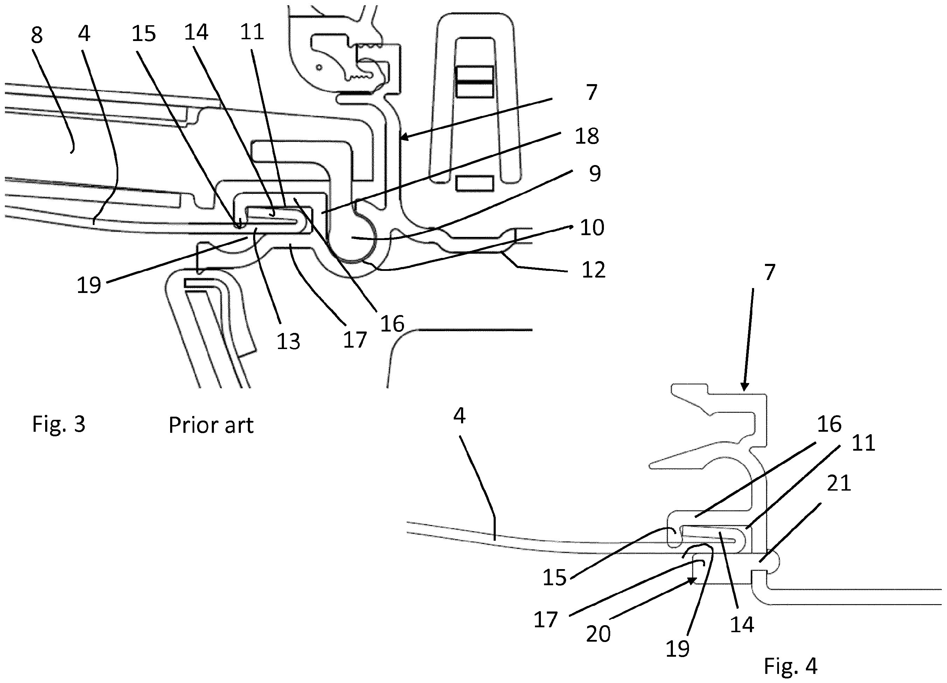

In so far the sunshade assembly has a conventional shape. Further, in a way known per se, the end of sunscreen 4 opposite the end which is wound onto winding shaft 5 is provided with an operating beam 8 which may be gripped manually for operating sunscreen 4 and locating it in a desired position. The opposite ends of the operating beam 8 comprise slide shoes 9 which are each guided in a guide groove 10 as shown in Fig. 3 illustrating the prior art. In this case, guide groove 10 is integrated into guide rails 6, 7, but could also be made in a rail running alongside it. The sunscreen may of course also be driven by an electric motor or other driving means.

Fig. 3 shows a cross section of one transverse edge of sunscreen 4 and of guide rail 7 according to the prior art. The same cross section (in mirror image) may be present at the guide rail on the opposite side of the sunscreen. The guide rail 6, 7, which may be slightly curved along its length, comprises a guide channel 11 for cooperation with sunscreen 4, a main section (not shown) which may include the operation mechanism for the closure panel and a connecting section 12 interconnecting the main section and guide channel 11.

There is shown a side portion 13 of sunscreen 4 which might be elastically stretchable at least in transverse direction (the remainder of the sunscreen may be substantially inelastic). Attached to or part of the lateral outer end of each side portion 13 of sunscreen 4 is a guide strip 14, which is thus provided on each longitudinal edge of sunscreen 4. This guide strip 14, which is straight in cross section in this embodiment, is accommodated in guide channel 9 of guide rails 6, 7. The guide strip 14 is rigid in transverse direction but is sufficiently flexible along its length so as to be wound on winding shaft 5 together with sunscreen 4 when it is positioned in a position aligned with the remainder of sunscreen 4. When guide strip 14 is introduced into guide channel 11 it is folded substantially 180 degrees into the position shown in Fig. 3. The free end of guide strip 14 is then hooked behind a hook member 15 at the free end of a flange 16 of guide rail 6, 7. Hook member 15 protrudes into guide channel 11. In this case flange 16 is the upper flange, while an opposite parallel bottom flange 17 supports sunscreen 4 from below. Flanges 16, 17, hook member 15 and a flange connecting part 18 of the guide rail 6, 7 define guide channel 11.

A narrow entrance opening 19 between hook member 15 and opposite flange 17 extends along at least a substantial part of the length of guide rail 16, 17. It allows passage of sunscreen 4, but should be as small as possible to maximize the pull out force of guide strip 14. However, guide rails 6, 7 are made from aluminium by extrusion and this manufacturing process limits the minimum size of opening 19. The invention solves this problem.

Fig. 4 shows a first embodiment of guide rail 6, 7 according to the invention. As is shown, bottom flange 17 is not a part of the extruded aluminium profile, but is made from a separate member, in particular a plastic member 20, in this case attached to the extruded aluminium profile of guide rail 6, 7. The plastic member 20 may e.g. be formed by extrusion, by moulding, in particular injection moulding, but also by spraying, which will be further elucidated later on. The plastic member 20 of Fig. 4 is made by injection moulding and comprises a plurality of heat stakes 21 inserted in a direction perpendicular to the longitudinal direction of guide rail 6, 7 into a plurality of holes 22 in the aluminium profile and heated to form an enlarged head locking heat stakes 21 in their respective hole 21. The dimension and shape of plastic member 20 can be chosen at will in order to optimize its function, i.e. holding and guiding guide strip 14 and sunscreen 4. Its shape, position and length in transverse direction determines opening 19. In this case, flange 17 formed by plastic member 20 is shorter than flange 16 having hook member 15.

As plastic member 20 forms the bottom flange 17, it is preferred to make it from a material having good sliding properties so as to optimize the sliding behaviour of sunscreen 4, thereby preventing high sliding forces and noises, such as stick slip noises. The shape of the die for the extruded aluminium profile has become simpler without small opening 19, so that the extruded profile is easier to produce.

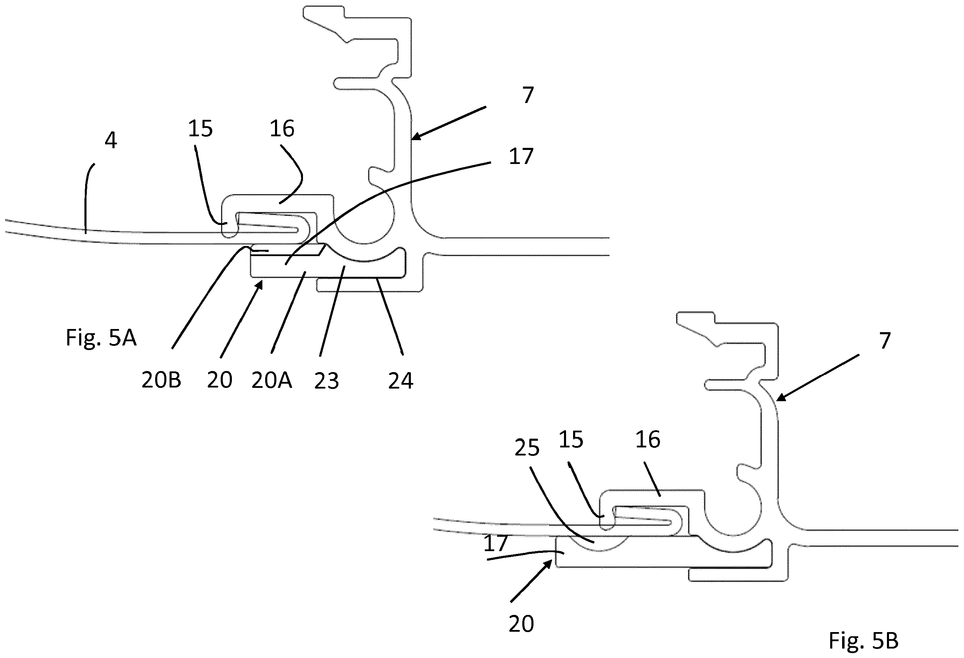

Figs. 5A and 5B show embodiments in which plastic member 20 is attached to the extruded profile by introducing it in a direction parallel to the longitudinal direction of guide rail 6, 7. A tongue 23 of plastic member 20 will then fit in a groove 24 in the extruded profile of guide rail 6, 7 such that it cannot be pulled out in a direction perpendicular to the longitudinal direction of guide rail 6, 7. The embodiment of Fig. 5A shows plastic member 20 being formed by a 2K extrusion process having a fastening and supporting basic component 20A made of a sturdy plastic and a sliding component 20B made of a plastic having good sliding properties. For example, the basic component 20A may be a PA, possible fiber reinforced, and the sliding component 20B may contain PTFE in a position forming a sliding surface of guide channel 11. In Fig. 5A, bottom flange 17 is shorter than upper flange 16 having hook member 15.

The embodiment of Fig. 5B, in which the extruded profile is equal to that of Fig. 5A, plastic member 20 is made longer than upper flange 16, so that bottom flange 17 protrudes laterally beyond hook member 15 to provide more support for the edge of sunscreen 4. A hollow 25 in the upper surface of plastic member 20 opposite to hook member 15 provides sufficient room for sunscreen 4 to move locally in downward direction if necessary to prevent it from becoming stuck.

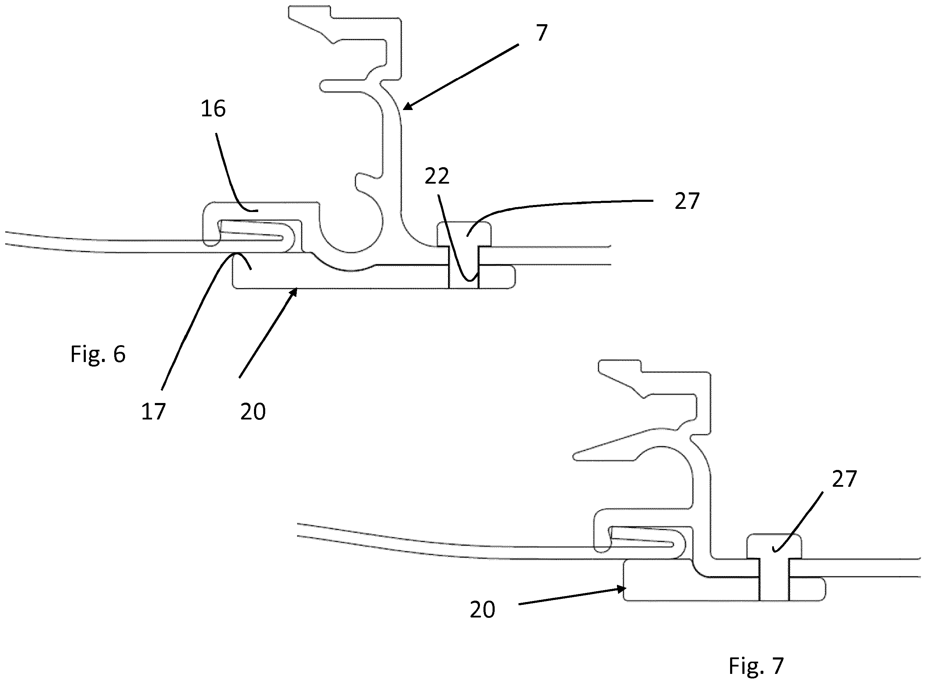

Figs. 6 and 7 show the extruded aluminium profiles of Fig. 5 and 4, respectively, which are each provided with plastic member 20 attached to the extruded profile of guide rail 6, 7 by separate screws 27. The screws 27 are inserted into holes 22 in a horizontal flange of guide rail 6, 7. The flange 17 of both plastic members 20 is the same, but the remainder of plastic member 20 is adapted to the extruded profile of guide rail 6, 7.

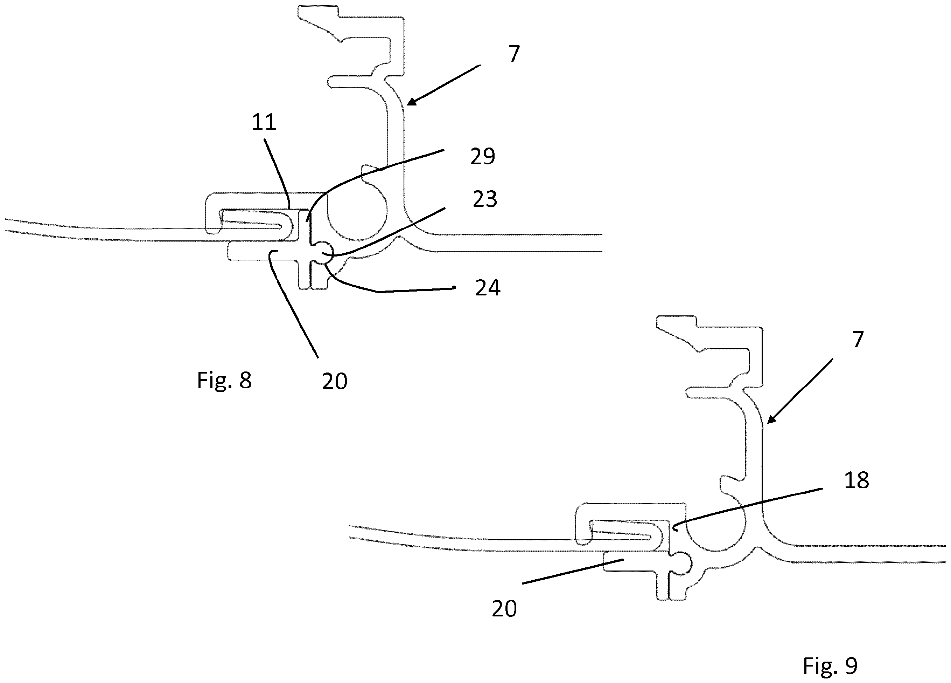

Figs. 8 and 9 again show embodiments of a plastic member 20 which is attached to the extruded profile of guide rail 6, 7 by a tongue and groove connection including tongue 23 and groove 24. Tongue 23 can be slid into groove 24 in longitudinal direction of guide rail 6, 7, but could also be clicked into groove 24, so in a direction perpendicularly to the longitudinal direction. Continuous tongue 23 could also be replaced by a plurality of protrusions clicked into separate holes replacing continuous groove 24. The difference between the two embodiments is that in Fig. 8 plastic member 20 has an upward extension 29 forming the back wall of guide channel 11, whereas in the Fig. 9 embodiment, the flange connecting part 18 forms this back wall.

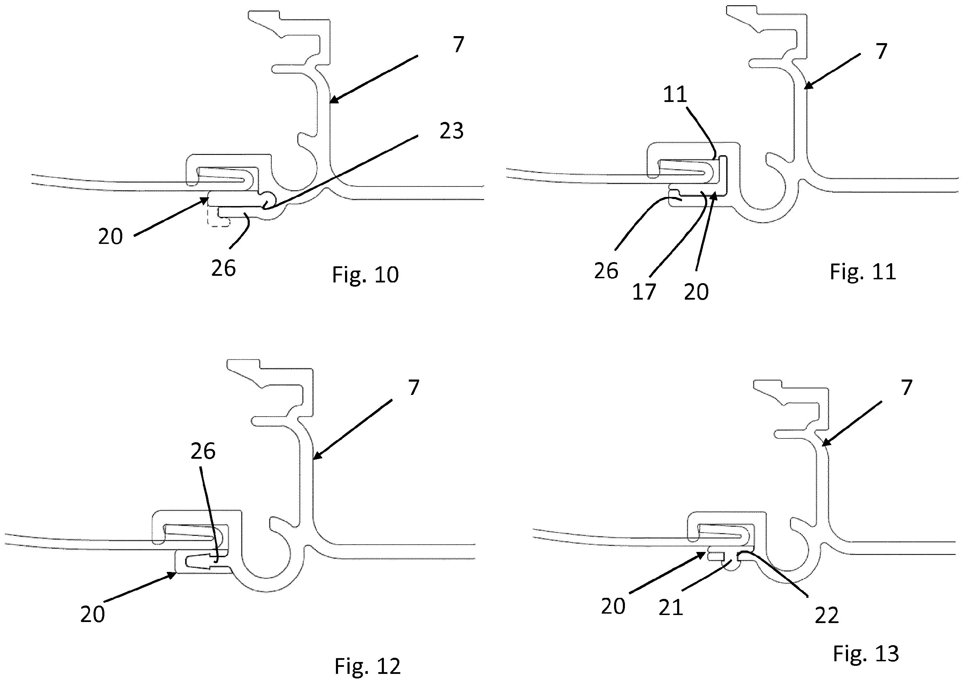

Figs. 10 - 13 show further variations of plastic member 20 for the extruded profile of guide rail 6, 7 not forming part of the invention. In these embodiments the extruded profile of guide rail 6, 7 has an additional horizontal flange 26 in order to support plastic member 20 in vertical direction so that plastic member 20 does not have to perform this supporting function.

In Fig. 10, flange 26 is formed below groove 24 of tongue-groove connection 23, 24A, so that, contrary to the Fig. 8 and 9 embodiments, plastic member 20 does not need portions to lock it against rotation around tongue 23 having a circular cross-section. A dashed line shows that plastic member 20 can be extended around the free end of support flange 26 to also prevent any upward movement/rotation of plastic member 20.

In Fig. 11 plastic member 20 is formed as a lining of guide channel 11 and in this embodiment it might be possible to form plastic member 20 by spraying it onto the extruded aluminium profile of guide rail 6, 7, in particular on flange connecting part 18 and support flange 26. This spraying can be done e.g. by the Window Spray Technology® by Basf. However, it is also possible that plastic member 20 is a preformed part slid into the extruded profile in longitudinal direction thereof.

Fig. 12 is an embodiment in which the extruded aluminium profile is provided with an arrow shaped support flange 26 onto which plastic member 20 is sprayed or slid to form bottom flange 17 of guide channel 11.

In the Fig. 13 embodiment flange 26 is provided with holes 22 for heat stakes 21 of plastic member 20.

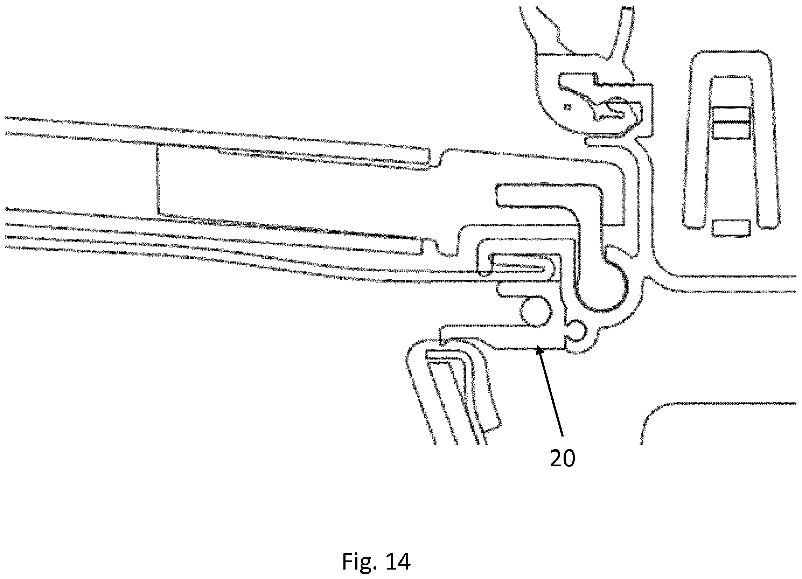

In the embodiment according to Fig. 14, plastic member 20 is provided with a downward extension that can perform another function than holding and guiding the sunscreen. This other function may for example be a holder for a light guide or a an adaptor to a headliner of the vehicle interior.

The invention is not limited to the examples described above and shown in the drawings and may be varied in different other ways, within the scope of the claims. For example, the plastic member may form the upper flange of the guide channel. The hook member may be formed on the bottom flange in case the guide strip is folded downwardly when introduced into the guide channel. The guide channel may also be turned 90 degrees or less such that its opening will be on the upper side or at least at a higher level than the remainder of the guide channel. The closure member may not only be a transparent panel, made of glass or plastic, but also a foldable member or a slatted member or the like.

## Claims

1. Guide rail (6, 7) for use in an open roof construction for a vehicle having a roof opening (1) in its fixed roof (2), comprising two opposite parallel flanges (16, 17) defining a guide channel (11) having an elongated narrow entrance opening (19) extending along at least a substantial part of the length of the guide channel, which is intended to guide and hold a holding member (14) of a sunscreen (4), wherein one (16) of the flanges (16, 17) is part of an extruded aluminium profile and the other flange (17) is formed at least partly by a plastic member (20) provided on the extruded aluminium profile **characterized in that** the plastic member (20), attached to the aluminium profile, defines a bottom flange (17) of the guide channel (11) which forms the main sliding surface for the sunscreen and which is capable of supporting the sunscreen.

2. Guide rail according to claim 1, wherein the plastic member (20) is an extruded profile or an injection-moulded part.

3. Guide rail according to claim 2, wherein the plastic member (20) is attached to the aluminium profile in a direction parallel to the longitudinal direction of the guide rail (6, 7), e.g. through a tongue (23) in groove (24) joint.

4. Guide rail according to claim 2, wherein the plastic member (20) is attached to the aluminium profile in a direction perpendicularly to the longitudinal direction of the guide rail (6, 7).

5. Guide rail according to claim 4, wherein the plastic member (20) is clicked into the aluminium profile.

6. Guide rail according to claim 5, wherein the plastic member (20) is attached to the aluminium profile through heat stakes (21) or screws (23).

7. Guide rail according to any of the preceding claims, wherein the flange (16) of the aluminium profile is provided with a hook member (15) protruding into the guide channel (11) to form the narrow entrance opening (19).

8. Guide rail according to claim 7, wherein, in transverse direction, the flange (17) made with the plastic member (20) is shorter than the flange (16) of the aluminium profile.

9. Guide rail according to claim 7, wherein, in transverse direction, the flange (17) made with the plastic member (20) is longer than the flange (16) of the aluminium profile.

10. Guide rail according to any of the preceding claims, wherein the plastic member (20) is made of a thermoplastic, such as P3P, POM, HDPE, PA or PTFE, or a plastic containing a dosage of PTFE, or a plastic comprising MOS₂ (Molybdeendisulfide) or a plastic containing a lubricant modifier.

11. Guide rail according to claim 10, wherein the plastic member (20) is formed by 2K extrusion in which the basic component may be a PA, possible fiber reinforced, and the second component contains PTFE in a position forming a sliding surface of the guide channel (11).

12. Open roof construction for a vehicle having a roof opening (1) in its fixed roof (2), comprising a pair of guide rails according to any of the preceding claims.

13. Open roof construction according to claim 12, wherein the plastic member (20) is provided with a downward extension performing another function.

## Patentansprüche

1. Führungsschiene (6, 7) zur Verwendung in einer Offendachkonstruktion für ein Fahrzeug, das eine Dachöffnung (1) in seinem festen Dach (2) hat, aufweisend zwei gegenüberliegende parallele Wangen (16, 17), die einen Führungskanal (11) definieren, der eine langgestreckte enge Zutrittsöffnung (19) hat, die sich entlang wenigstens eines wesentlichen Teils der Länge des Führungskanals erstreckt, und der vorgesehen ist, um ein Haltelement (14) einer Sonnenblende (4) zu führen und zu halten, wobei eine (16) der Wangen (16, 17) Teil eines extrudierten Aluminiumprofils ist und die andere Wange (17) zumindest teilweise von einem Kunststoffelement (20) gebildet ist, das an dem extrudierten Aluminiumprofil bereitgestellt ist, **dadurch gekennzeichnet, dass** das Kunststoffelement (20), das an dem Aluminiumprofil angebracht ist, eine untere Wange (17) des Führungskanals (11) definiert, die die Hauptgleitfläche für die Sonnenblende bildet und die imstande ist, die Sonnenblende zu tragen.

2. Führungsschiene gemäß Anspruch 1, wobei das Kunststoffelement (20) ein extrudiertes Profil oder ein spritzgegossenes Teil ist.

3. Führungsschiene gemäß Anspruch 2, wobei das Kunststoffelement (20) an dem Aluminiumprofil angebracht ist in einer Richtung parallel zu der Längsrichtung der Führungsschiene (6, 7), z.B. durch eine Nut (24) - und - Feder (23) - Verbindung.

4. Führungsschiene gemäß Anspruch 2, wobei das Kunststoffelement (20) an dem Aluminiumprofil angebracht ist in einer Richtung senkrecht zu der Längsrichtung der Führungsschiene (6, 7).

5. Führungsschiene gemäß Anspruch 4, wobei das Kunststoffelement (20) in das Aluminiumprofil eingeklickt ist.

6. Führungsschiene gemäß Anspruch 5, wobei das Kunststoffelement (20) an dem Aluminiumprofil angebracht ist durch Warmnieten (21) oder Schrauben (23).

7. Führungsschiene gemäß irgendeinem der vorhergehenden Ansprüche, wobei die Wange (16) des Aluminiumprofils bereitgestellt ist mit einem Hakenelement (15), das in den Führungskanal (11) vorsteht, um die enge Zutrittsöffnung (19) zu bilden.

8. Führungsschiene gemäß Anspruch 7, wobei, in Querrichtung, die Wange (17), die mit dem Kunststoffelement (20) gemacht ist, kürzer ist als die Wange (16) des Aluminiumprofils.

9. Führungsschiene gemäß Anspruch 7, wobei, in Querrichtung, die Wange (17), die mit dem Kunststoffelement (20) gemacht ist, länger ist als die Wange (16) des Aluminiumprofils.

10. Führungsschiene gemäß irgendeinem der vorhergehenden Ansprüche, wobei das Kunststoffelement (20) gemacht ist aus einem Thermoplast, wie z.B. P3P, POM, HDPE, PA oder PTFE, oder einem Kunststoff, der eine Dosierung aus PTFE enthält, oder einem Kunststoff, der MOS2 (Molybdändisulfid) aufweist, oder einem Kunststoff, der einen Schmierstoff-Modifizierer enthält.

11. Führungsschiene gemäß Anspruch 10, wobei das Kunststoffelement (20) durch 2K-Extrusion geformt ist, wobei die Basiskomponente ein PA, möglichweise Faser-verstärkt, sein kann und die zweite Komponente PTFE in einer Position enthält, welche die Gleitfläche des Führungskanals (11) bildet.

12. Offendachkonstruktion für ein Fahrzeug, das eine Dachöffnung (1) in seinem festen Dach (2) hat, aufweisend ein Paar Führungsschienen gemäß irgendeinem der vorhergehenden Ansprüche.

13. Offendachkonstruktion gemäß Anspruch 12, wobei das Kunststoffelement (20) mit einer nach-Unten-Erweiterung versehen ist, die eine andere Funktion durchführt.

## Revendications

1. Rail de guidage (6, 7) destiné à être utilisé dans une construction à toit ouvrant pour un véhicule ayant une ouverture de toit (1) dans son toit fixe (2), comprenant deux patins (16, 17) parallèles opposés définissant un canal de guidage (11) ayant une ouverture d'entrée étroite (19) allongée s'étendant le long d'au moins une partie importante de la longueur du canal de guidage, qui est destinée à guider et maintenir un élément de maintien (14) d'un pare-soleil (4), dans lequel l'un (16) des patins (16, 17) fait partie d'un profilé en aluminium extrudé et l'autre patin (17) est formé au moins partiellement par un élément en plastique (20) prévu sur le profilé en aluminium extrudé **caractérisé en ce que** l'élément en plastique (20), fixé au profilé en aluminium, définit un patin (17) inférieur du canal de guidage (11) qui forme la surface de coulissement principale pour le pare-soleil et qui est capable de supporter le pare-soleil.

2. Rail de guidage selon la revendication 1, dans lequel l'élément en plastique (20) est un profilé extrudé ou une partie moulée par injection.

3. Rail de guidage selon la revendication 2, dans lequel l'élément en plastique (20) est fixé au profilé en aluminium dans une direction parallèle à la direction longitudinale du rail de guidage (6, 7), par exemple par le biais d'un assemblage de languette (23) dans une rainure (24).

4. Rail de guidage selon la revendication 2, dans lequel l'élément en plastique (20) est fixé au profilé en aluminium dans une direction perpendiculairement à la direction longitudinale du rail de guidage (6, 7).

5. Rail de guidage selon la revendication 4, dans lequel l'élément en plastique (20) est encliqueté dans le profilé en aluminium.

6. Rail de guidage selon la revendication 5, dans lequel l'élément en plastique (20) est fixé au profilé en aluminium par le biais d'attaches thermiques (21) ou de vis (23).

7. Rail de guidage selon l'une quelconque des revendications précédentes, dans lequel le patin (16) du profilé en aluminium est doté d'un élément en crochet (15) faisant saillie dans le canal de guidage (11) pour former l'ouverture d'entrée étroite (19).

8. Rail de guidage selon la revendication 7, dans lequel, dans une direction transversale, le patin (17) fait avec l'élément en plastique (20) est plus court que le patin (16) du profilé en aluminium.

9. Rail de guidage selon la revendication 7, dans lequel, dans une direction transversale, le patin (17) fait avec l'élément en plastique (20) est plus long que le patin (16) du profilé en aluminium.

10. Rail de guidage selon l'une quelconque des revendications précédentes, dans lequel l'élément en plastique (20) est fait de thermoplastique, tel que P3P, POM, HDPE, PA ou PTFE, ou de plastique contenant un dosage de PTFE, ou de plastique comprenant du MOS₂ (disulfure de molybdène) ou de plastique contenant un modificateur de lubrifiant.

11. Rail de guidage selon la revendication 10, dans lequel l'élément en plastique (20) est formé par extrusion 2K dans laquelle le constituant de base peut être du PA, possiblement renforcé de fibres, et le second constituant contient du PTFE dans une position formant une surface de coulissement du canal de guidage (11).

12. Construction à toit ouvrant pour un véhicule ayant une ouverture de toit (1) dans son toit fixe (2), comprenant une paire de rails de guidage selon l'une quelconque des revendications précédentes.

13. Construction à toit ouvrant selon la revendication 12, dans laquelle l'élément en plastique (20) est doté d'une extension vers le bas exécutant une autre fonction.
